(19) Europäisches Patentamt
European Patent Office
Office européen des brevets

(11) Veröffentlichungsnummer: **0 507 133 A2**

(12) **EUROPÄISCHE PATENTANMELDUNG**

(21) Anmeldenummer: **92104380.8**

(51) Int. Cl.$^5$: **C08G 77/398**

(22) Anmeldetag: **13.03.92**

(30) Priorität: **03.04.91 DE 4110706**

(43) Veröffentlichungstag der Anmeldung: **07.10.92 Patentblatt 92/41**

(84) Benannte Vertragsstaaten: **AT BE CH DE DK ES FR GB IT LI LU NL PT**

(71) Anmelder: **DEGUSSA AG**
**Weissfrauenstrasse 9**
**W-6000 Frankfurt (Main)(DE)**

(72) Erfinder: **Wieland, Stefan, Dr.**
**Starkenburgring 27**
**W-6050 Offenbach/Main(DE)**
Erfinder: **Panster, Peter, Dr.**
**Im Lochseif 8**
**W-6458 Rodenbach(DE)**
Erfinder: **Despeyroux, Bertrand, Dr.**
**Kleinfellerstrasse 3**
**W-6450 Hanau 1(DE)**
Erfinder: **Deller, Klaus, Dr.**
**Friedhofstrasse 47**
**W-6452 Hainburg(DE)**

(54) **Metallhaltige, geformte polymere tertiäre und/oder sekundäre Organosiloxanaminverbindungen, Verfahren zu ihrer Herstellung und Verwendung.**

(57) Es werden metallhaltige geformte polymere tertiäre und/oder sekundäre Organosiloxanaminverbindungen vorgestellt, welche die Metalle Pd, Pt, Ru, Rh einzeln oder in Kombination sowie gegebenenfalls nach Promotoren und/oder Moderatoren enthalten. Das als Träger für die Metalle fungierende Organosiloxanamin besteht aus Einheiten

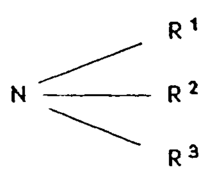

und/oder Einheiten

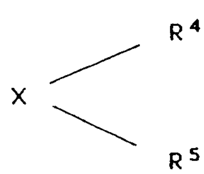

(II)

wobei $R^1$ bis $R^5$ eine Gruppe

EP 0 507 133 A2

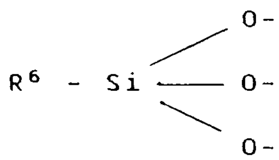

(III)

mit $R^6$ als an N und Si gebundenen zweibindigen Rest (z. B. ein Alkylenrest) ist und X ein Aminrest wie H-N< oder $H_3C$-N< ist. Die Trägersubstanz kann mit Si-, Ti-, Zr- oder Al-haltigen Vernetzern vernetzt sein. Das metallhaltige Produkt hat Kugelform und ist mit den Parametern Kugeldurchmesser, spezifischer Oberfläche und Porenvolumen sowie Schüttdichte definiert. Ein in mehreren Varianten ausführbares Herstellungsverfahren sowie die Verwendung des metallhaltigen Produkts als Katalysator für Hydrierungs- und Oxidationsreaktoren sind weitere Gegenstände der Erfindung.

In der DE-PS 38 00 563 werden geformte polymere tertiäre und sekundäre Organopolysiloxanaminverbindungen und in der DE-0S 34 04 702 Platin- und/oder Palladium-haltige Organosiloxanammoniumverbindungen, ihre Herstellung und Verwendung beschrieben.

Die Erfindung betrifft Palladium, Platin, Ruthenium und/oder Rhodium enthaltende Organosiloxanaminverbindungen, bei denen eines oder mehrere der Edelmetalle auf kugelförmig geformten Organopolysiloxanaminverbindungen das in DE-PS 38 00 563 und DE-PS 39 25 359 stofflich und herstellungsmäßig offenbarten Typs ausgewählter und enger Korngrößenverteilung fixiert vorliegen und gegebenenfalls durch eine reduktive Behandlung aktiviert wurden. Diese in Wasser und in organischen Lösungsmitteln unlöslichen Edelmetall-haltigen Verbindungen sind als Katalysatoren für zahlreiche Reaktionen, wie Hydrierungen, Oxidationen, Hydrosilylierung einsetzbar und zeichnen sich durch hohe Aktivität und Selektivität aus.

In der Technik werden Edelmetall-haltige Trägerkatalysatoren für zahlreiche chemische Umsetzungen verwendet. Als Einsatzform kommen Pellets, Tabletten, Bruchkörper, Strangpreßlinge und Extrudate verschiedener geometrischer Formen und Größen für Anwendungen im Festbett oder Wanderbett sowie feinteilige Pulver für Suspensionen in Rührreaktoren zur Anwendung.

Die Trägermaterialien sind hierbei entweder Aktivkohlen verschiedener Genese, Härte und Reinheit, die mehreren physikalisch-chemischen Reinigungs- und Aktivierungsschritten unterworfen wurden oder oxidische Träger wie $Al_2o_3$, $Sio_2$, $Tio_2$, $Zro_2$. die entweder über Sol-Gel-Verfahren, Fällungsreaktionen oder über Flammenhydrolyse (hier als pyrogene Oxidpulver) hergestellt und gegebenenfalls nachträglich verformt werden. Die Edelmetallkomponente wird bei diesen Katalysatoren durch Imprägnieren, Benetzen oder Besprühen der Trägermaterialien mit Edelmetall-haltigen Lösungen oder durch Adsorption oder durch Auffällung von Edelmetallverbindungen auf den Träger aufgebracht und anschließend wird gegebenenfalls reduziert. Naturgemäß sind die dabei entstehenden Metallcluster und Metallflächen nur ungenügend definiert und nur bedingt reproduzierbar. Nachteilig ist weiterhin die leichte Ablösbarkeit der Metalle in komplexierenden oder aggressiven Medien sowie die mangelhafte Abriebfestigkeit insbesondere unregelmäßig geformter Trägermaterialien, was im Einsatz zu einem Edelmetallabtrag und damit zu einem Edelmetallverlust bzw. zu einer Kontamination des mit dem Katalysator herzustellenden Produktes führt.

Die Erfindung zielt darauf ab, neuartige Edelmetallhaltige Organopolysiloxane zu synthetisieren, die als Katalysatoren verwendet werden können und die obigen Nachteile nicht aufweisen.

Diese erfindungsgemäße Aufgabe wird durch metallhaltige Organopolysiloxanaminverbindungen gemäß Anspruch 1 und ihre Synthese gemäß Anspruch 7 gelöst.

Von besonderer Bedeutung ist, daß die erfindungsgemäßen Palladium-, Platin-, Ruthenium- und/oder Rhodiumhaltigen geformten polymeren Organopolysiloxanaminverbindungen funktionalisierte Trägerkatalysatoren sind. Die aus Anpruch 1 hervorgehenden, an tertiäre bzw. sekundäre Amingruppen geknüpften Aminfunktionen haben wesentlichen Einfluß auf die anwendungstechnischen und chemischen Eigenschaften der fertigen Katalysatoren. Hiermit läßt sich insbesondere die Metalldispersität steuern und gegenüber Trägerkatalysatoren, welche keine organisch funktionalisierten Träger haben, erhöhen.

Die Art der die Aminfunktion mit dem Silizium verbindenden organischen Spacergruppe ist bei den vorgestellten Katalysatorprodukten in weiten Bereichen variierbar, ohne daß grundlegende Unterschiede im katalytischen Verhalten der einzelnen Stoffe auftreten. Durch Einbau zusätzlicher vernetzender Einheiten, die gemäß der üblichen Klassifizierung (s. W. Noll, Chemie und Technologie der Silikone) als tetrafunktionell (Q-Typ), trifunktionell (T-Typ) oder difunktionell (D-Typ) bezeichnet werden, mit den Zentralatomen Si, Ti oder Zr, oder durch T- bzw. D-Typen mit Al als Zentralatom, können zusätzliche, anwendungstechnisch vorteilhafte Eigenschaften der Organopolysiloxanaminverbindungen eingestellt werden. Entscheidende Charakteristika der erfindungsgemäßen Katalysatorprodukte sind die Abmessungen der kugelförmigen Teilchen, welche die Einsatzform des Katalysators bestimmt, die Porosität, die damit zusammenhängende Schüttdichte und die Oberfläche, welche entscheidend für die Kinetik der zu katalysierenden Reaktionen ist.

All diese Eigenschaften sind innerhalb des in Anspruch 1 gesteckten Rahmens in zahlreichen Varianten realisierbar.

Als vorteilhaft für Anwendungen wie die Verwendung als Hydrierkatalysator hat sich erwiesen, daß das gewählte Metall oder eine gewählte Metallkombination weitgehend in nullwertiger, d. h. elementarer Form vorliegt, da hierdurch die Aktivität, z. B. die Hydrieraktivität in Standardtestreaktionen, deutlich erhöht wird und andererseits der Metallabtrag durch komplexierend wirkende Lösungsmittel oder Reagenzien vermieden wird. Der jeweils erwünschte Reduktionsgrad richtet sich nach dem eingesetzten Edelmetall und dem Reaktionssystem der Anwendung.

Während im Fall einer Hydrierung z. B. bei Pt und Rh meist der reine metallische Zustand erwünscht ist, bevorzugt man für Anwendungen in Oxidationsreaktionen z. B. bei Pd zumindest einen teiloxidierten Katalysator. Bei Kombination der beanspruchten Edelmetalle kann sich ein empirisch ermittelter spezifischer Reduktionsgrad als erforderlich oder günstig erweisen. Dem Fachmann verbleibt hiermit ein erheblicher

Spielraum für Optimierungen.

Die Kombination zweier oder mehrerer der Metalle miteinander (Anspruch 3), als auch mit weiteren Übergangsmetallen, Alkali- und/oder Erdalkalimetallen sowie mit den Metallen der 3. , 4. und 5. Hauptgruppe, wobei insbesondere Li, Na, K, Mg, Ca, Fe, Cu, Ag. Au, Zn, Cd, Sn, Pb, Sb und Bi bevorzugt sind, bietet ebenfalls Vorteile im Hinblick auf Reaktivität und Selektivität der Katalysatoren. Bei der Verwendung von Multimetallkatalysatoren, einer in der Technik gängigen Praxis, wirken die neben den in Anspruch 1 genannten Metallen zugesetzten Metallkomponenten als Promotoren oder Moderatoren.

Die Kombination mehrerer Metalle hat sich z. B. bei der Synthese von Vinylacetat als sinnvoll erwiesen; hier werden u. a. Kombinationen Pd/Au, Pd/Cd oder Pd/Au/Bi/K beschrieben.

Für Oxidationsreaktionen werden häufig Pd/Pt/Bi-Katalysatoren und für selektive Hydrierung von C-C Dreifachbindungen zu Alkenen Pd/Pb-Systeme eingesetzt.

Bei den beanspruchten Organosiloxanaminverbindungen ergeben sich aus der Kombination verschiedener Metalle prinzipiell die gleichen synergistischen Effekte wie sie für die obengenannten Kombinationen gelten.

Je nach Anwendungsfall kann es sinnvoll sein, die Edelmetallgehalte innerhalb des in Anspruch 4 genannten Rahmens zu variieren und hochaktive, mit hohen Edelmetallbeladungen versehene Katalysatoren zu verwenden. Dies ist insbesondere bei Reaktionen angebracht, bei denen das Ziel eine vollständige Durchhydrierung ist und das Reaktionsmedium gegebenenfalls hohe Mengen an Katalysatorgiften enthält. Andererseits sind auch hochselektive Katalysatoren mit sehr kleinen Edelmetallgehalten interessant, bei denen das Edelmetall gegebenenfalls in Form einer dünnen, nur wenige $\mu$m dicken Schicht auf einem Organosiloxanamin großen Kugeldurchmessers aufgebracht ist.

Aufgrund der guten Verfügbarkeit sind insbesondere auch Organosiloxanaminverbindungen interessant. die dadurch gekennzeichnet sind, daß $R^1$ bis $R^5$ für eine Gruppe der allgemeinen Formel V stehen (Anspruch 5).

Solche Silane mit organofunktionellem Propylrest sind in größeren Mengen wohlfeil erhältlich, außerdem wird mit der $C_3$-Spacergruppierung die gewünschte Anbindung einer organischen Funktionalität ohne allzugroße Störung der kieselsäureartigen Matrix erreicht.

Die Organosiloxanaminverbindungen können als Copolykondensate vorliegen, wobei statistische Copolykondensate mit homogener, statistischer räumlicher Verteilung der Monomereinheiten möglich sind. Von besonderem Interesse sind Block-Copolykondensate, die durch Vorkondensation der verschiedenen Monomerbestandteile mit sich selbst oder anderen reaktiven Substanzen. wie den bekannten monomeren Ausgangsstoffe für die in Anspruch 1 genannten "vernetzenden Brückenglieder" (Beispiel: $Si(OCH_3)_4$) und anschließende Kondensation der als Zwischenprodukt erhaltenen oligomeren bzw. Telomeren, oder durch sukzessive Kondensation der Monomerbestandteile mit bereits polykondensiertem Material erhältlich sind. Selbstverständlich sind auch gemischte Copolykondensate in allen aus der organischen Polymerchemie hinlänglich bekannten Varianten möglich (Anspruch 6).

Der technische Vorteil solcher Copolykondensate liegt in der Möglichkeit, gezielt Produkte herzustellen, die über Gebiete hoher Funktionalitäts- und Metalldichte und über solche mit geringer Funktionalität und geringem Metallgehalt verfügen. Es ist offensichtlich, daß auf diese Weise besonders günstig Schalenkatalysatoren mit hohem Anteil an Funktionalität an der Oberfläche und geringer Funktionalität im Inneren herstellbar sind.

Je nach Art der Copolykondensate sind somit metallhaltige geformte Organosiloxanaminverbindungen mit einer Metallanreicherung auf der Oberfläche in Form einer dünnen oder dicken Schicht, auf einer Kugelschale im Inneren des Materials oder mit homogener Metallverteilung möglich. All dies wird bei bekannten technischen Katalysatoren durch eine manchmal recht aufwendige Variation der Imprägniertechnik zu erreichen versucht. Die Wirkungen der vorgesehenen einzelnen katalytisch aktiven Stoffe und ihrer Kombinationen sowie ihre Verwendung sind Stand der Technik. Der Einsatz gezielt hergestellter statistischer Copolykondensate. Block-Copolykondensate und gemischter Copolykondensate ermöglicht eine unmittelbare, sichere und einfache Steuerung der Metallverteilung bei der Katalysator-Synthese.

Besondere Bedeutung hat, als weiterer Gegenstand der Erfindung, das Verfahren zur Herstellung der erfindungsgemäßen metallhaltigen Organosiloxanaminverbindungen und seine Abwandlungen.

Hierbei wird eine Edelmetallverbindung des Pd, Pt, Ru und/oder Rh gegebenenfalls zusammen mit weiteren Edelmetall-oder Nichtedelmetall-haltigen Verbindungen (Promotor-Vorstufen) mit einem polymeren kugelförmigen, gegebenenfalls als Copolykondensat vorliegenden Organosiloxanamin gemäß Anspruch 7 umgesetzt. Je nach Art der eingesetzten Edelmetallverbindung(en) muß die Umsetzung bei angemessenen Temperaturen erfolgen, um einerseits eine unkontrollierte Zersetzung und Metallausscheidung zu vermeiden und andererseits eine vollständige Umsetzung der Metallverbindung mit dem Organosiloxanamin zu erreichen.

Anwendbar sind Temperaturen unterhalb, bei oder oberhalb Raumtemperatur (z. B. 5° C - 80° C). Von Bedeutung ist die Ionenstärke, der je nach Wahl der Metalle unterschiedliche pH-Wert zur Vervollständigung der Umsetzung und zur Vermeidung vorzeitiger Ausfällungen (ca. pH 4 - 10) und die allgemeine chemische Zusammensetzung der Reaktionslösung. So hat es sich z. B. im Falle der Umsetzung mit Rh-(III)-Verbindungen als hilfreich erwiesen, wenn der hier sauren Reaktionslösung zusätzlich ein Alkalihalogenid zugesetzt wird. Die Reaktionszeit beeinflußt die räumliche Verteilung und die Festigkeit der Bindung des Metalls auf der Organosiloxanaminverbindung. Anwendbar sind 1 Min. bis zu 48 Stunden.

Das zur Umsetzung mit den Metallverbindungen verwendete Organosiloxanamin kann gemäß Anspruch 1 in seiner chemischen Zusammensetzung variieren. Hierbei kommt (bei Anwesenheit beider Aminarten, d. h. von Einheiten der Formeln I und II) u. a. dem Verhältnis von sekundärem zu tertiärem Amin im Copolykondensat eine wesentliche Bedeutung zu. Einerseits läßt sich durch das Aminverhältnis das Polykondensationsverhalten und damit verknüpft, insbesondere auch die Korngröße des geformten Organosiloxanamins steuern, andererseits beeinflußt die Aminfunktionalität die Stabilität der vorübergehend bei der Umsetzung gemäß Verfahrensanspruch 7 gebildeten Metallkomplexe in hohem Maße.

Da bei der Herstellung des bei der Kondensation eingesetzten tertiären Aminosilans zusätzlich auch sekundäre und primäre Aminosilane anfallen, bietet die Verwendung eines Gemisches dieser Amine für die Herstellung der polymeren Organosiloxanaminverbindungen noch zusätzliche ökonomische und ökologische Vorteile, da ein aufwendiger Reinigungsschritt eingespart wird.

Die Anwesenheit primären Aminosilans stört nicht, sofern dessen Konzentration nur klein genug ist (< 10 Mol%).

Einen besonderen Vorteil liefert die Verwendung geformter, makroskopisch in Form kugelförmiger Teilchen vorliegender Organosiloxanaminverbindungen als Katalysatorträger. Hierzu sei insbesondere auf die hervorragenden mechanischen Eigenschaften des kugelförmigen Materials, verbunden mit hoher Abriebfestigkeit und auf die gute Filtrierbarkeit im Vergleich zu feinteiligem ungeformten Material, welches im trockenen Zustand in Pulverform und angefeuchtet als schlecht filtrierbarer Schlamm vorliegt, hingewiesen. Eine Zerkleinerung und Mahlung der geformten polymeren Organosiloxanaminverbindungen ist natürlich möglich; einer im Einzelfall möglichen Erhöhung der katalytischen Aktivität stehen jedoch gravierende Verfahrens- und Verwendungsnachteile gegenüber, so daß dies insgesamt nicht von Vorteil ist.

Für die Umsetzung der beschriebenen Reaktionspartner Edelmetallverbindung und polymeres Organosiloxanamin kann im Prinzip jedes Lösungsmittel verwendet werden, in dem die Metallverbindung wenigstens teilweise löslich ist; bevorzugt sind aber gängige Lösungsmittel polarer Natur. deren Handhabung weitgehend unproblematisch ist, wie Alkohole und insbesondere Wasser (Anspruch 8). Wasser, mit herausragendem Lösungsverhalten, ermöglicht zudem auch die Verwendung weiterer Salze, welche von dem Träger adsorbiert und im Katalysator als Promotoren oder Moderatoren fungieren können.

Das metallhaltige Organosiloxanamin kann nun gemäß Anspruch 7 noch reduktiv nachbehandelt werden, wobei alle in der Katalysatorpräparation gängigen Techniken angewandt werden können. Selbstverständlich eignen sich einzelne Reduktionsmittel und Verfahrensvarianten je nach Edelmetall, Edelmetallkonzentration und angestrebter Katalysatorwirkung mehr oder weniger gut für die Umsetzung (Anspruch 10). Neben der Art und Stärke des Reduktionsmittels sind insbesondere Temperatur und Konzentration bedeutsame Parameter. Für die Aktivität und Selektivität der hergestellten Katalysatoren ist auch der Trockungs- und/oder Temperungsprozeß von Wichtigkeit, wobei selbstverständlich einer oder beide Schritte entfallen können. Für den Einsatz in Oxidationsreaktionen und Wahl dafür geeigneter Metalle bzw. Metallverbindungen (z. B. $PtO_2$) kann die gegebenenfalls angewandte abschließende reduktive Behandlung des Katalysatorvorprodukts (gemäß Ansprüchen 7 - 12) nur unvollständig durchgeführt, durch eine oxidative Behandlung mit Sauerstoff, sauerstoffhaltigen Gasen oder anderen Oxidationsmitteln, bei denselben Temperaturen und Behandlungsdauern, ergänzt oder ersetzt werden. Eine entsprechende Formierung ist auch im Medium der Oxidationsreaktion möglich.

Die Aufarbeitung kann unter Schutzgas, unter normaler Atmosphäre oder unter Schutzgas, welches definierte Mengen an reaktiven Gasen wie Wasserstoff oder auch Sauerstoff enthält, erfolgen. Die gewählten Bedingungen beeinflussen u. a. die Aktivität, Selektivität und gegebenenfalls die pyrophore Neigung des Katalysators. Durch Spuren von Sauerstoff kann eine oberflächliche Passivierung erreicht werden, wie aus der Literatur bekannt.

Die reduktive Behandlung der gemäß Anspruch 11 hergestellten metallhaltigen Organosiloxanaminverbindungen muß nicht in flüssiger alkoholhaltiger Phase, sondern kann auch durch Reaktion mit Gasen oder Dämpfen von Alkoholen oder anderen organischen Verbindungen wie Aldehyden durchgeführt werden.

Eine reduktive Behandlung kann unmittelbar nach der Fixierung des Edelmetalls auf dem geformten Organosiloxanamin oder aber zu einem späteren Zeitpunkt, insbesondere auch beim späteren Einsatz als Katalysator unter den Reaktionsbedingungen einer Anwendung erfolgen. Dasselbe gilt für eine etwaige

oxidative Behandlung.

Die Verwendung der erfindungsgemäßen metallhaltigen Organosiloxanaminverbindungen erfolgt vorteilhaft zur Katalyse von Reduktionen und Oxidationen allgemein - Anspruch 13, insbesondere von Umsetzungen mit Wasserstoff oder Sauerstoff. Desgleichen können damit auch Reaktionen durchgeführt werden, für die technische Metallkatalysatoren allgemein eingesetzt werden, wobei hierzu insbesondere die Hydrosilylierung erwähnt sei.

Die erfindungsgemäßen Katalysatoren können als Suspensionskontakte aber auch im Fest- oder Fließbett eingesetzt werden (Anspruch 14).

Die Erfindung wird nachfolgend anhand von Ausführungsbeispielen weiter erläutert, wobei die grundsätzlich wichtigen Verfahrensschritte beispielhaft berücksichtigt sind.

Beispiel 1

20 g eines gemäß Beispiel 3 der DE-PS 38 00 563 hergestellten polymeren Organosiloxanamins der Formeleinheit $N(CH_2\text{-}CH_2\text{-}CH_2\text{-}SiO_{3/2})_3 \cdot 3\ SiO_2$ mit kugelförmigen Teilchen in einer Körnung von 95 %. zwischen 50 und 100 µm wurden in 150 ml destilliertem Wasser suspendiert und 2 Stunden mit einem KPG-Rührer bei Raumtemperatur gerührt. Zu dieser Suspension wurden 3,279 g $K_2PdCl_4$, gelöst in 50 ml Wasser, im Verlaufe von 10 Minuten zugetropft und die Reaktionslösung eine weitere Stunde zur Adsorption gerührt. Das Produkt wurde abfiltriert, mit Wasser und anschließend mehrmals mit Ethanol gewaschen, 30 Minuten bei 60° C in Ethanol gerührt, abfiltriert und dann bei 145° C im Stickstoffstrom getrocknet.

| | |
|---|---|
| Schüttdichte:<br>Mesoporenvolumen:<br>Makroporenvolumen: | 320 g/l<br>1 ,76 ml/g ($d_{max}$ = 15 nm)<br>0,56 ml/g |
| ESCA-Ergebnisse:ca. 65 % "Pd0" (336 eV), ca. 35 % "$Pd0_2$" (338 ev) Pd-Kristallitgröße aus TEM-Aufnahmen: 7 - 9 nm | |

Beispiel 2

40 g eines gemäß DE-PS 38 00 563 hergestellten polymeren Organosiloxanamins der Formeleinheit $N\text{-}(CH_2\text{-}CH_2\text{-}CH_2\text{-}SiO_{3/2})_3 \cdot 2\ SiO_2$ mit kugelförmigen Teilchen in einer Körnung von 95 % zwischen 0,3 und 0,6 mm wurden in 300 ml destilliertem Wasser suspendiert und 1/2 Stunde mit einem KPG-Rührer bei Raumtemperatur gerührt. Zu dieser Suspension wurden 626,2 mg $K_2PdCl_4$, gelöst in 50 ml Wasser, zugegeben und 1/2 Stunde gerührt.

Mit 18 Gew.-%iger Sodalösung wurde ein pH = 9 eingestellt und 6,5 g Natriumformiat zugegeben. Die Lösung wurde dann erwärmt und 1 Stunde bei 60° C gerührt. Das Produkt wurde abfiltriert, gewaschen und bei 150° C getrocknet.

Beispiel 3

5 g eines Organopolysiloxans der Formel $N(CH_2\text{-}CH_2\text{-}CH_2\text{-}SiO_{3/2})_3 \cdot 2\ SiO_2$ mit Korngröße 0,2 - 0.3 mm wurden in 50 ml Wasser suspendiert, 736,1 mg $RuCl_3 \cdot H_2O$ in 20 ml Wasser gelöst zugesetzt und 70 Minuten bei Raumtemperatur gerührt. Der pH-Wert wurde auf pH = 6 eingestellt und 1 Stunde bei 60° C adsorbiert, wobei der pH konstant gehalten wurde. Das Rohprodukt wurde abgesaugt, in 23 ml Wasser eingetragen und mit 27 ml 24 %iger Hydraziniumhydroxidlösung versetzt, die Lösung vorsichtig auf 60° C hochgeheizt (Gasentwicklung) und 1 Stunde reagieren lassen. Dann wurde der Katalysator abgesaugt, mit Ethanol gewaschen und unter $N_2$-Inertgas bei 150° C getrocknet. Der Katalysator ist pyrophor und glüht an der Luft, die weitere Handhabung muß unter Inertgas erfolgen.

Beispiel 4

5 g eines Polysiloxans der Formel $N(CH_2\text{-}CH_2\text{-}CH_2\text{-}SiO_{3/2})_3 \cdot 2\ SiO_2\ 0{,}2\ TiO_2$ (Korngrößenbereich 0, 1 - 1 , 0 mm) wurden in eine Lösung von 562 mg $K_2PtCl_4$ in 50 ml Wasser eingetragen und 2 Stunden bei 60° C gerührt. Nach dem Abkühlen der Lösung wurden 5.1 ml einer 37 Gew.-%igen Formalinlösung zugegeben und der pH-Wert auf 9,3 eingestellt. Nach einer Reaktionszeit von 1 Stunde bei 60° C wurde der Katalysator abgesaugt. Wassergehalt: 54 Gew.%.

Beispiel 5

10 g eines Polysiloxans der Formel $H\text{-}N(CH_2\text{-}CH_2\text{-}CH_2\text{-}SiO_{3/2})_2 \cdot 0{,}4\ N(CH_2\text{-}CH_2\text{-}CH_2\text{-}SiO_{3/2})_3 \cdot SiO_2$ - (Korngrößenbereich 1 ,0 - 1 ,8 mm) wurden mit 1,64 g $K_2PdCl_4$. gelöst in 80 ml 0,2M NaCl-Lösung bei Raumtemperatur gerührt. Das Produkt wurde abfiltriert und der dunkelbraune Feststoff in eine beheizbare Glassäule mit Gasanschluß überführt. Zunächst wurde 30 Minuten bei Raumtemperatur mit $H_2$ gespült, dann die Innentemperatur langsam auf 140° C erhöht. Der Wasserstoffverbrauch lag bei 29 ml/min (Messung bei Raumtemperatur und 10 mbar Hz Überdruck). Nach 1 Stunde war die Reaktion beendet, der Katalysator wurde im Ar-Gasstrom abgekühlt.
CO-Adsorption: 1 ,85 ml/g.

Beispiel 6

20 g eines Polysiloxans der Formel $N(CH_2\text{-}CH_2\text{-}CH_2\text{-}Si0_{3/2})_3 \cdot 3\ SiO_2$ wurden in 200 ml Ethanol suspendiert und eine Lösung von 2,67 g $RhCl_3 \cdot 3\ H_2O$ in 200 ml Ethanol zugegeben. Der Ansatz wurde unter Inertgas (Ar) 3 Stunden bei Raumtemperatur gerührt und dann 6 Stunden am Rückfluß gekocht. Der schwarze Feststoff wurde abgesaugt, mehrmals mit Wasser gewaschen, abgesaugt und der Wassergehalt bestimmt.
Wassergehalt: 67 Gew.%.

Beispiel 7

10 g eines gemäß Beispiel 11 der DE-PS 39 25 360 hergestellten Polysiloxans wurden analog zu Beispiel 1 mit 328 mg $K_2PdCl_4$ umgesetzt. Es wurde ein Katalysator der Zusammensetzung

$$N[CH_2\text{-}\overset{\overset{CH_3}{|}}{C}H\text{-}CH_2SiO_{3/2}]_3 \cdot Br\text{-}CH_2C_6H_4\text{-}(CH_2)_2\text{-}SiO_{3/2} \cdot$$
$$0{,}2\ ZrO_2\ /\ 1\ \%\ Pd\ \text{erhalten.}$$

Beispiel 8

5 g eines Polysiloxans der Formel $C_2H_5N(CH_2CH_2SiO_{3/2})_2 \cdot (H_3C)_2SiO_{2/2} \cdot 0{,}2\ AlO_{3/2}$ wurden gemäß Beispiel 3 mit 368 mg $RuCl_3 \cdot x\ H_2O$ (35 Gew.% Ru) umgesetzt und 5,128 g eines 2,5 Gew.%igen Ru enthaltenden Katalysators erhalten.

Beispiel 9

5 g eines gemäß Beispiel 9 der DE-PS 39 25 359 hergestellten Polysiloxans wurden völlig analog zu Beispiel 1 umgesetzt und 5, 10 g eines 1 ,9 Gew.%igen Pd enthaltenden Polymers der Zusammensetzung $\cdot\ H\text{-}N[(CH_2)_{10}\ SiO_{3/2}]_2 \cdot 0{,}5\ N(CH_2\text{-}CH_2\text{-}CH_2\text{-}SiO_{3/2})_3$ /1 .9% Pd erhalten.

Beispiel 10

200 mg des in Beispiel 1 hergestellten Pd-Katalysators wurden mit 10 g Zimtsäure in 100 ml Ethanol in einer Niederdruckhydrierapparatur aus Glas mit Begasungsrührer vorgelegt.

Bei einer Temperatur von 25° C und einem $H_2$-Überdruck von 10 mbar wurde Zimtsäure zu Phenylpropansäure hydriert, die katalytische Aktivität betrug 635 ml $H_2$/min/g Katalysator.

Beispiel 11

200 mg eines gemäß Beispiel 2 hergestellten Pd-Katalysators, jedoch mit Korngröße 50 - 100 µm, wurden mit 10 g Zimtsäure in 100 ml Ethanol in einer Niederdruckhydrierapparatur aus Glas mit Begasungsrührer vorgelegt. Bei einer Temperatur von 25° C und einem $H_2$-Überdruck von 10 mbar wurde

Zimtsäure zu Phenylpropansäure hydriert, die Edelmetall bezogene katalytische Aktivität betrug 20.8 ml $H_2$/min/mg Palladium.

Beispiel 12

200 mg eines gemäß Beispiel 4 hergestellten Pt-Katalysators, jedoch mit Korngröße 50 - 100 µm, wurden mit 5,8 g Crotonsäure in 120 ml Ethanol in einer Niederdruckhydrierapparatur aus Glas mit Begasungsrührer vorgelegt. Bei einer Temperatur von 25° C und einem $H_2$-Überdruck von 10 mbar wurde Crotonsäure zu Butansäure hydriert, die katalytische Aktivität betrug 320 ml $H_2$/min/g Katalysator.

## Patentansprüche

1. Palladium-, Platin-, Ruthenium- und/oder Rhodium- sowie gegebenenfalls Promotoren und/oder Moderatoren enthaltende geformte polymere tertiäre und/oder sekundäre Organosiloxanaminverbindungen, **dadurch gekennzeichnet,** daß das geformte Organosiloxanamin aus Einheiten der Formel

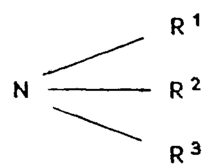

(I)

und/oder aus Einheiten der Formel

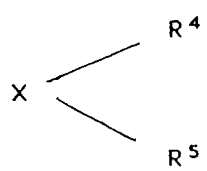

(II)

besteht, wobei

$X = H\text{-}N<$ , $H_3C\text{-}N<$ , $H_5C_2\text{-}H<$ , $H_7C_3\text{-}N<$ ,

$R^1$ bis $R^5$, welche gleich oder verschieden sind, eine Gruppe der allgemeinen Formel

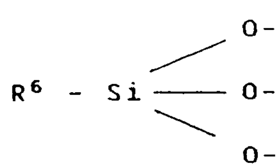

(III)

bedeuten, wobei $R^6$ direkt an das Stickstoffatom gebunden ist und eine lineare oder verzweigte Alkylengruppe mit 1 bis 10 C-Atomen, eine Cycloalkylengruppe mit 5 bis 8 C-Atomen oder eine Einheit der allgemeinen Formel

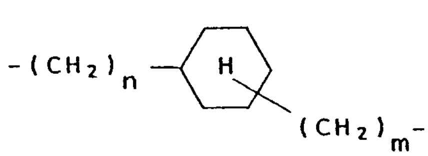

oder

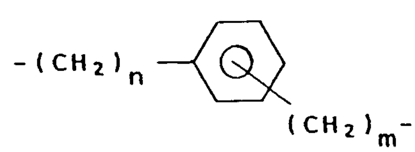

darstellt. in der n und m eine Zahl von 0 bis 6 ist, n die Zahl N-ständiger und m die Zahl Si-ständiger

Methylengruppen angibt, die freien Valenzen der an das Si-Atom gebundenen Sauerstoffatome wie bei Kieselsäuregerüsten durch Siliciumatome weiterer Gruppen der Formel (III) und/oder über die Metallatome in einem oder mehreren vernetzenden Brückengliedern

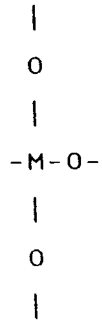 oder 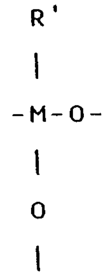 oder 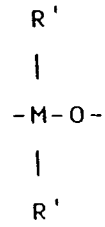

bzw. (IV)

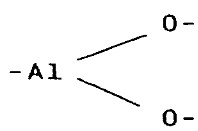 oder 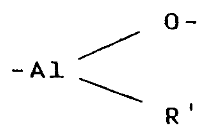

abgesättigt sind, M ein Si-, Ti-, oder Zr-Atom und R' eine lineare oder verzweigte Alkylgruppe mit 1 bis 5 C-Atomen oder eine Phenylgruppe ist, das Verhältnis der Siliciumatome aus den Gruppen der allgemeinen Formel (III) zu den Metallatomen in den vernetzenden Brückengliedern (IV) 1 : 0 bis 1 : 30 und das Verhältnis zwischen der Molzahl an Amineinheiten (I) und Amineinheiten (II) 1 : 0 bis 0 : 1 beträgt und die polymeren Organosiloxanaminverbindungen makroskopisch als kugelförmige Teilchen mit einem Durchmesser von 0,01 bis 3,0 mm, einer spezifischen Oberfläche von 0,01 bis 1200 $m^2$/g, einem spezifischen Porenvolumen von 0,01 bis 6,5 ml/g sowie einer Schüttdichte von 50 bis 1000 g/l vorliegen.

**2.** Metallhaltige geformte polymere Organosiloxanaminverbindungen gemäß Anspruch 1,
**dadurch gekennzeichnet,**
daß Palladium, Platin, Ruthenium und/oder Rhodium in überwiegend elementarer Form vorliegen.

**3.** Metallhaltige geformte polymere Organosiloxanaminverbindungen gemäß Anspruch 1 oder 2,
**dadurch gekennzeichnet,**
daß Palladium, Platin, Ruthenium und/oder Rhodium allein oder in Kombination auf der Organosiloxanaminverbindung vorliegen.

**4.** Metallhaltige geformte polymere Organosiloxanaminverbindungen gemäß den Ansprüchen 1 bis 3,
**dadurch gekennzeichnet,**
daß der Metallgehalt des Polymersystems 0,001 Gew.% bis 20,0 Gew.%, vorzugsweise 0,01 Gew.% bis 10,0 Gew.% beträgt.

**5.** Metallhaltige geformte polymere Organosiloxanaminverbindungen nach den Ansprüchen 1 bis 4,
**dadurch gekennzeichnet,**
daß $R^1$ bis $R^5$ für eine Gruppe der allgemeinen Formel

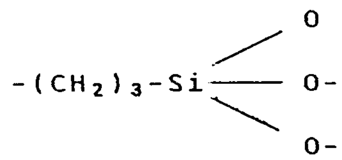

(V)

stehen.

6. Metallhaltige geformte polymere Organosiloxanaminverbindungen nach den Ansprüchen 1 bis 5, welche Einheiten der Formel (I) und (II) enthalten,
**dadurch gekennzeichnet,**
daß sie als statistische Copolykondensate, Block-Copolykondensate oder auch als gemischte Copolykondensate vorliegen.

7. Verfahren zur Herstellung der metallhaltigen geformten polymeren Organosiloxanaminverbindungen nach den Ansprüchen 1 bis 6,
**dadurch gekennzeichnet,**
daß man eine oder mehrere wasserhaltige oder wasserfreie Metallverbindungen (VI) von
$M'_2PdX'_6$, $M'_2PdX'_4$, $PdX'_2$, $PdL_2X'_2$, $pdL_4X'_2$
$M'_2PtX'_6$, $M'_2PtX'_4$, $PtX'_2$, $PtL_2X'_2$, $PtL_4X'_2$, $RuX'_2L_4$, $RuL_6X'_2$
$M'_4RuX'_6$, $M'_4[Ru_2OX'_{10}]$, $RuX'_3$, $Ru(NO)X'_3$, $RuX'_3L_3$, $RuL_6X'_3$
$M'_2RhX'_5L$, $M'_3RhX'_6$, $RhX'_3$, $RhL_5X'_3$, $RhL_6X'_3$, $RhL_3X'_3$,
$RhL_4X'_3$
$M'RhX'_4L_2$
wobei
X' für Cl, Br, J, CN, $NO_2$, $NO_3$, $\frac{1}{2}SO_4$, Acetat,
Acetylacetonat, OH,
L für $NH_3$, ein primäres, sekundäres oder tertiäres Amin oder Diamin sowie CO oder $H_2O$ und
M' für H, Na, K, $NH_4$, $\frac{1}{2}$ Ba steht.
in einem die Metallverbindung (VI) wenigstens teilweise lösenden Lösungsmittel oder Lösungsmittelgemisch mit einem kugelig geformten polymeren Organosiloxanamin-Ausgangsmaterial. bestehend aus Einheiten der Formel (I) und/oder (II) , wobei X und $R^1$ bis $R^5$ dieselbe Bedeutung wie in Anspruch 1 haben und die freien Valenzen der an das Si-Atom gebundenen Sauerstoffatome weiterer Gruppen der Formel (III) und/oder über die Metallatome in einem oder mehreren vernetzenden Brückengliedern (IV) abgesättigt sind und M und R' dieselbe Bedeutung wie in Anspruch 1 haben, und das Verhältnis der Siliciumatome aus den Gruppen der allgemeinen Formel (III) zu den Metallatomen M bzw. Al in den vernetzenden Brückengliedern (IV) 1 : 0 bis 1 : 30 und das Verhältnis zwischen der Molzahl an Amineinheiten (I) und Amineinheiten (II) 1 : 0 bis 0 : 1 beträgt, und die kugelförmigen Teilchen einen Durchmesser im Bereich von 0,01 bis 3,0 mm, eine spezifische Oberfläche von 0,01 bis 1200 $m^2/g$, ein spezifisches Porenvolumen von 0,01 bis 6,5 ml/g sowie eine Schüttdichte von 50 bis 1000 g/l haben, in einem der gewünschten Metallkonzentration entsprechenden stöchiometrischen Verhältnis umsetzt, den metallhaltigen Feststoff anschließend, gegebenenfalls nach einem Wechsel des Lösungsmittels vor oder nach einer oder mehreren der Maßnahmen Abtrennen von der flüssigen Phase, Waschen mit demselben oder einem anderen Lösungsmittel oder Extrahieren, Trocknen bei Raumtemperatur bis 250° C an Luft, unter Schutzgas oder im Vakuum, Tempern an der Luft oder unter Schutzgas bei 150 bis 300° C und Klassierung, gegebenenfalls noch mit einer stöchiometrischen oder auch unterschüssigen oder überschüssigen Menge eines Reduktionsmittels 1 Min. bis 48 Stunden bei Raumtemperatur bis 200° C und gegebenenfalls einem der Summe der Partialdrucke der Komponenten der Reaktionsmischung bei der jeweiligen Temperatur entsprechenden Überdruck behandelt.

8. Verfahren gemäß Anspruch 7,
**dadurch gekennzeichnet,**
daß man die Umsetzung der Metallverbindung (VI) mit dem geformten polymeren Organosiloxanamin und die Reduktion des metallhaltigen Feststoffs in Wasser und/oder einem linearen oder verzweigten Alkohol mit 1 bis 5 C-Atomen durchführt.

9. Verfahren gemäß Anspruch 7 oder 8.

**dadurch gekennzeichnet,**
daß man das metallhaltige, gegebenenfalls mit einem Reduktionsmittel behandelte geformte polymere Organosiloxanamin nach dem Abtrennen von der flüssigen Phase mit einem niederen, linearen oder verzweigten Alkohol mit 1 bis 5 C-Atomen wäscht.

**10.** Verfahren gemäß den Ansprüchen 7 bis 9,
**dadurch gekennzeichnet,**
daß man die Reduktion des metallhaltigen geformten polymeren Organosiloxanamins mit einem linearen oder verzweigten Alkohol mit 1 bis 5 C-Atomen oder mit Formaldehyd, einem Alkali- oder Erdalkaliformiat, Hydrazin, einer Hydrazinverbindung, einem Alkali- oder Erdalkalimetallborhydrid. Wasserstoff oder Kohlenmonoxid oder auch - hier im trockenen Zustand - mit einer Boranverbindung, einem Alkali- oder Erdalkalimetallalanat, Alan- oder einer Alanverbindung, oder einem Alkali-oder Erdalkalimetallhydrid durchführt.

**11.** Verfahren zur Herstellung der metallhaltigen geformten polymeren Organosiloxanaminverbindungen nach den Ansprüchen 1 bis 6,
**dadurch gekennzeichnet,**
daß man eine oder mehrere wasserhaltige oder wasserfreie Metallverbindungen (VI) in einem die Metallverbindung (VI) wenigstens teilweise lösenden Lösungsmittel oder Lösungsmittelgemisch mit einem kugelförmigen polymeren Organosiloxanamin, bestehend aus Einheiten der Formel (I) und/oder (II) , wobei deren chemischer und physikalischer Aufbau demjenigen von Anspruch 7 entspricht, in einem der gewünschten Metallkonzentration entsprechenden stöchiometrischen Verhältnis umsetzt, den metallhaltigen Feststoff anschließend sofort oder erst bis zu 24 Stunden danach nach einer oder mehreren der übrigen im Anspruch 7 angegebenen Aufarbeitungsmaßnahmen behandelt und gegebenenfalls der Reduktion unterwirft, wobei vorzugsweise die in Anspruch 8 angegebene Variante angewandt wird aber das gemäß Anspruch 9 gewaschene metallhaltige Vorprodukt zur Reduktion mit Alkohol-haltiger Lösung versetzt und vorzugsweise erhitzt oder im alkoholfeuchten Zustand getrocknet und/oder getempert wird.

**12.** Verfahren gemäß Anspruch 11,
**dadurch gekennzeichnet,**
daß man das Vorprodukt in feuchtem oder getrocknetem Zustand vor oder während einer seiner Verwendungen gemäß nachfolgenden Ansprüchen 13, 14, gegebenenfalls im Einsatzmedium der Verwendung, bei Raumtemperatur bis 300° C und Normaldruck oder Überdruck mit Wasserstoff reduktiv behandelt.

**13.** Verwendung der metallhaltigen geformten polymeren Organosiloxanaminprodukte nach den Ansprüchen 1 bis 6 als Katalysatoren für Hydrierungs- und Oxidationsreaktionen.

**14.** Verwendung nach Anspruch 13,
**dadurch gekennzeichnet,**
daß die metallhaltigen geformten polymeren Organosiloxanaminprodukte für Reaktionen in der Flüssigphase oder in der Gasphase. in Suspension, im Festbett oder im Fließbett eingesetzt werden.